# EUROPÄISCHE PATENTSCHRIFT

(11) **EP 1 832 417 B1**
(45) Veröffentlichungstag und Bekanntmachung des Hinweises auf die Patenterteilung: **09.10.2013**
(21) Anmeldenummer: 07101537.4
(22) Anmeldetag: 01.02.2007
(51) Int. Cl.: B41F 13/004, B41F 33/00, B41F 33/14, B41F 33/16, B41F 33/18, G05B 19/00

(54) **Bearbeitungsmaschinen mit mindestens einer Antriebseinheit mit einem zumindest einen Motor regelnden Antriebsregler**
Processing machine with at least a driving unit with at least drive controller controlled by a motor
Machine de traitement avec au moins une unité d'entrainement avec au moins un régulateur d'entrainement regulé par un motéur

(30) Priorität: 10.03.2006 DE 102006011201
(43) Veröffentlichungstag der Anmeldung: 12.09.2007
(73) Patentinhaber: Koenig & Bauer Aktiengesellschaft, 97080 Würzburg (DE)
(72) Erfinder: Seyfried, Rüdiger, 97265, Hettstadt (DE)
(74) Vertreter: Stiel, Jürgen

(56) Entgegenhaltungen:
- EP-A1- 0 068 482
- EP-A1- 1 388 769
- DE-A1- 10 052 046
- DE-A1- 10 129 889
- DE-B3- 10 317 570
- DE-U1- 20 000 919
- FR-A1- 2 620 380
- US-A1- 2002 131 454
- US-A1- 2003 109 947
- US-B1- 6 456 222
- US-B1- 6 891 838

## Beschreibung

Die Erfindung betrifft eine Bearbeitungsmaschine, insbesondere Druckmaschine, mit mindestens einer Antriebseinheit mit einem zumindest einen Motor regelnden Antriebsregler gemäß dem Oberbegriff des Anspruchs 1.

Durch die JP 62-278037 A ist ein in einer Druckmaschine angeordneter Motor mit einer seine Drehgeschwindigkeit steuernden Steuereinheit bekannt, wobei zwei auf eine Papierbahn gerichtete Sensoren an der Steuereinheit angeschlossen sind, wobei die Sensoren eine Bahnspannung der Papierbahn erfassen, wobei die Steuereinheit die Drehgeschwindigkeit des Motors erhöht, wenn die Bahnspannung einen zulässigen Minimalwert unterschreitet, und die Drehgeschwindigkeit herabsetzt, wenn die Bahnspannung einen zulässigen Maximalwert überschreitet.

Durch die EP 1 375 140 A2 ist eine Steuerung für Rotationsdruckmaschinen bekannt, wobei in der jeweiligen Antriebssteuereinheit dezentraler Antriebe frei programmierbare Funktionsmodule implementiert sind, die im Zusammenwirken mit anderen Steuerungskomponenten dezentrale Steuerungsfunktionen ausführen, welche keine unmittelbaren und lokalen Antriebsfunktionen sind. Mit dem Funktionsmodul kann z. B. ein Temperaturfühler verbunden sein, wobei das Funktionsmodul das Messsignal dieses Sensors über ein Bussystem an die jeweilige Antriebssteuereinheit übermittelt.

Durch die US 4 966 074 A ist eine aus mehreren Druckeinheiten bestehende Offset-Rollenrotationsdruckmaschine bekannt, wobei den Druckeinheiten eine Antriebssteuereinheit zugeordnet ist, wobei zwei auf den jeweiligen Übertragungszylinder gerichtete optische Sensoren ihr Messsignal jeweils an die Antriebssteuereinheit leiten, wobei die Sensoren einen eventuellen Bahnbruch oder Bahnwickler an dem jeweiligen Übertragungszylinder detektieren, wobei die Antriebssteuereinheit bei einem detektierten Bahnbruch oder Bahnwickler die Offset-Rollenrotationsdruckmaschine durch eine Trennung der Antriebe von ihrer Stromversorgung zum Stillstand bringt.

Durch die US 6,456,222 B1 ist ein Gebersignalumsetzer z. B. für Produktionsmaschinen bekannt, der aus über einen Antriebsbus übertragenen Geberwerten lmpulssignale generiert. Die Gebersignale sind auf dem Antriebsbus in Echtzeit übertragbar, von einem Gebersignalumsetzer in Echtzeit in geberkompatible lmpulssignale umsetzbar und sind an weitere Geräte wahlweise in Echtzeit übermittelbar.

Durch die DE 103 17 570 B3 ist eine Antriebsvorrichtung einer Druckmaschine mit mindestens einer virtuellen Leitachse zur Vorgabe einer Soll-Winkellage eines Antriebes wenigstens einer durch einen eigenen Antriebsmotor angetriebenen Einheit bekannt, wobei mit der Leitachse mindestens eine Schaltung in Verbindung steht, mittels welcher das sich zeitlich verändernde Datum für die Winkellage einer Leitachsposition in eine Impulsfolge als Ausgangssignale wandelbar ist und wobei die Schaltung im Hinblick auf die Anzahl von Impulsen pro Umdrehung parametrierbar ist.

Durch die DE 101 29 889 A1 ist ein Verfahren zur Störungserfassung beim Transport einer Bahn, insbesondere zur Erfassung eines Bahnbruchs beim Transport einer Papierbahn in einer Rollenrotationsdruckmaschine bekannt, bei dem die Geschwindigkeit der Bahn durch berührungslose Messung nach dem Dopplerprinzip bestimmt und nachfolgend ausgewertet wird, wobei eine erste lokale Geschwindigkeit der Bahn an einer ersten Messposition unter Einsatz von Mikrowellen bestimmt wird, und wobei wenigstens eine zweite lokale Geschwindigkeit der Bahn an wenigstens einer zweiten Messposition unter Einsatz von Mikrowellen bestimmt wird.

Der Erfindung liegt die Aufgabe zugrunde, eine Bearbeitungsmaschine mit mindestens einer Antriebseinheit mit einem zumindest einen Motor regelnden Antriebsregler zu schaffen, wobei der Antriebsregler auf einfache Weise insbesondere an die Betriebssicherheit der Bearbeitungsmaschine betreffende Betriebsbedingungen adaptierbar ist.

Die Aufgabe wird erfindungsgemäß durch die Merkmale des Anspruchs 1 gelöst.

Die mit der Erfindung erzielbaren Vorteile bestehen insbesondere darin, dass eine Reaktionszeit auf eine im Produktionsprozess der Bearbeitungsmaschine aufgetretene, sensorisch erkannte Störung zur Auslösung einer sicherheitsrelevanten Einrichtung der Bearbeitungsmaschine vergleichsweise kurz gehalten werden kann. Mit einer verkürzten Reaktionszeit auf eine Störung wird die Maschinenabsicherung verbessert, was die Betriebssicherung der Bearbeitungsmaschine erhöht und den Einsatz der Betriebsmittel und/oder Verbrauchsstoffe z. B. durch eine Reduktion von sonst bei einer Störung produzierter Makulatur verbessert.

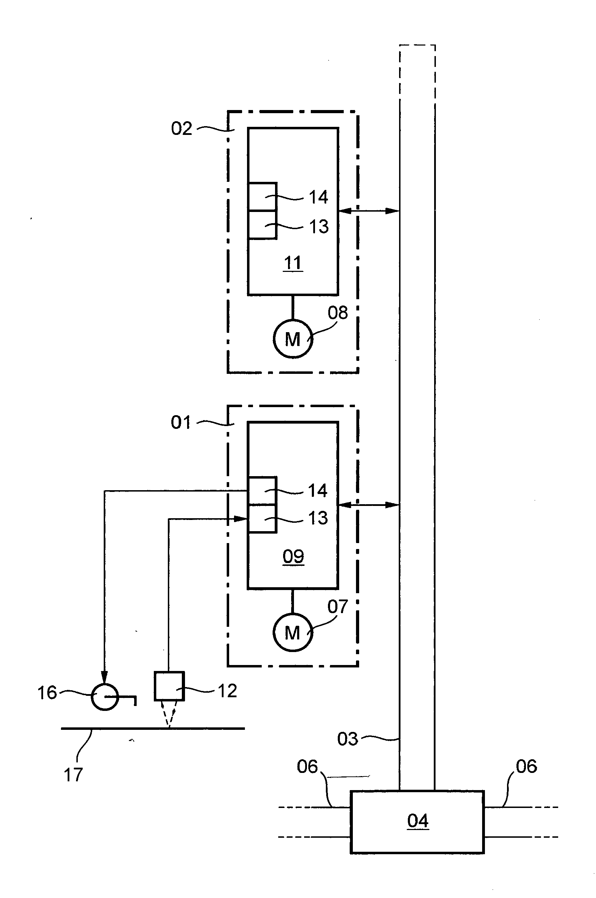

Ein Ausführungsbeispiel der Erfindung ist in der Zeichnung dargestellt und wird im Folgenden näher beschrieben. Die Figur zeigt schematisch eine Anordnung von Antriebseinheiten mit je einer Steuereinheit, wobei mindestens eine dieser Steuereinheiten Anschlüsse zum Anschluss eines Sensors und eines Aktors aufweist.

Die Erfindung betrifft insbesondere eine z. B. als eine Rollendruckmaschine oder als eine Bogendruckmaschine oder als eine Tiefdruckmaschine ausgebildete Druckmaschine, d. h. eine einen Bedruckstoff insbesondere durch Bedrucken bearbeitende Bearbeitungsmaschine, wobei die genannten Druckmaschinen jeweils insbesondere als eine Rotationsdruckmaschine ausgebildet sind. Die Druckmaschine druckt z. B. in einem Flachdruckverfahren, z. B. in einem Offsetdruckverfahren, d. h. in einem ein Feuchtmittel verwendendes Nassoffsetdruckverfahren oder in einem Trockenoffsetdruckverfahren ohne Feuchtmittel. Die Druckmaschine kann z. B. als eine Zeitungsdruckmaschine oder als eine Akzidenzdruckmaschine verwendet werden.

Die Druckmaschine ist z. B. als eine mehrere Sektionen aufweisende Druckanlage ausgebildet, wobei die Sektionen der Druckanlage einzeln in voneinander unabhängigen Produktionen betreibbar sind, wobei jede Sektion mindestens einen Sektionsrechner zur Koordinierung des in der jeweiligen Sektion auszuführenden Produktionsprozesses aufweist. Der Sektionsrechner steuert demnach einen von der jeweiligen Sektion auszuführenden Produktionsablauf. Der Sektionsrechner steht über ein Kommunikationsnetzwerk mit einer mehreren Sektionen der Druckanlage übergeordneten Steuerungseinheit in vorzugsweise bidirektionaler datentechnischer Verbindung. Das Kommunikationsnetzwerk der Druckanlage ist z. B. Ethernet-basiert ausgebildet.

Jede der Sektionen der Druckanlage weist mindestens eine Maschineneinheit, vorzugsweise mehrere Maschineneinheiten auf. Die Maschineneinheit oder zumindest eine der Maschineneinheiten können ausgebildet sein z. B. als ein zumindest zwei zusammenwirkende Zylinder und ein Farbwerk aufweisendes Druckwerk oder als ein Einzugswerk oder als ein Führungssystem eines bahnförmigen Bedruckstoffes oder als ein mindestens eine Fangwalze umfassendes Bahnsicherungssystem oder als ein Rollenwechsler oder als ein Logistiksystem zur Zuführung des Bedruckstoffes an die Druckmaschine oder als ein Kühlwalzenständer oder als ein Trockner oder als ein Falzapparat. Der Bedruckstoff kann als eine Materialbahn, z. B. als eine Papierbahn, oder als ein Druckbogen ausgebildet sein.

Die Druckanlage ist vorzugsweise aus mehreren Maschineneinheiten zusammengesetzt, wobei jede Maschineneinheit ein eigenständiges Modul dieser Druckanlage bildet. Die Druckanlage weist mehrere, vorzugsweise auch mehrere gleichartige Maschineneinheiten auf, insbesondere mehrere, z. B. zu einem Druckturm aufeinandergestapelte Druckwerke, durch welche ein zu bedruckender Bedruckstoff vertikal geführt ist, wobei in der Druckanlage mehrere dieser Drucktürme horizontal aneinandergereiht aufgestellt sein können, wobei dann mehrere Drucktürme gegebenenfalls unter Einbeziehung mindestens einer weiteren Maschineneinheit, z. B. einer als ein Rollenwechsler oder als ein Falzapparat ausgebildeten Maschineneinheit, eine Sektion der Druckanlage bilden.

Module der Druckanlage werden einzeln und unabhängig voneinander gefertigt, montiert und in ihrer jeweiligen Funktion geprüft; sie bilden in der Druckanlage eine geschlossene, komplexe, austauschbare Funktionseinheit. Eine funktionsfähige Druckmaschine bzw. Druckanlage entsteht erst an ihrem Einsatzort durch ein Zusammenfügen und miteinander Verbinden von mehreren Maschineneinheiten und zumeist weiteren, von den Maschineneinheiten verschiedenen Funktionseinheiten, die z. B. als eine z. B. eine Anzeigeeinrichtung aufweisende Bedien- und/oder Visualisierungseinheit und/oder als ein Datenserver und/oder als eine Netzwerkschnittstelle ausgebildet sind, wobei die verschiedenen Maschineneinheiten und auch die anderen Funktionseinheiten vorzugsweise durch ihre jeweilige Anbindung an das Kommunikationsnetzwerk der Druckanlage datentechnisch miteinander vernetzt sind. Die Bedien- und/oder Visualisierungseinheit ist z. B. in Verbindung mit einem Leitstand der Druckanlage ausgebildet. Die Anzeigeeinrichtung der Bedien- und/oder Visualisierungseinheit visualisiert insbesondere Daten, die für einen von der Druckanlage ausgeführten oder auszuführenden Druckprozess relevant sind. Die Netzwerkschnittstelle der Druckanlage kann eine Kommunikation von an das Kommunikationsnetzwerk der Druckanlage angeschlossenen Maschineneinheiten und Funktionseinheiten mit einem externen, d. h. außerhalb und getrennt von der Druckanlage angeordneten Rechner über ein lokales Netzwerk (LAN) und/oder über ein weltweit operierendes Netzwerk (Internet) ermöglichen und/oder koordinieren.

Jede Maschineneinheit weist vorzugsweise mehrere Komponenten auf. Eine solche Komponente kann z. B. als eine steuerbare Komponente ausgebildet sein, z. B. als eine Antriebseinheit. Die Antriebseinheit schließt z. B. einen lagegeregelten oder einen drehzahlgeregelten oder einen drehmomentgeregelten elektrischen Motor ein, welcher z. B. eine Rollenaufnahme eines Rollenwechslers oder einen oder mehrere Zylinder z. B. eines Druckwerks oder eines Falzapparates oder eine oder mehrere Walzen z. B. eines Farbwerks und/oder eines Feuchtwerks oder Zugwalzen in einem Bahnführungssystem antreibt. In einer z. B. als ein Druckwerk oder als ein Falzapparat ausgebildeten Maschineneinheit sind vorzugsweise mehrere Antriebseinheiten vorgesehen. Vorzugsweise sind in der Druckmaschine bzw. in der Druckanlage mehrere Antriebseinheiten mitsamt ihrer jeweiligen Steuereinheit dezentral angeordnet. Jede Antriebseinheit weist einen den Motor regelnden Antriebsregler auf, wobei der Betrieb dieses Motors, d. h. die von diesem Motor angetriebene Achse, im Hinblick auf weitere z. B. in derselben oder in einer anderen Maschineneinheit oder vorzugsweise zumindest in derselben Sektion vorgesehenen angetriebenen Achsen zu koordinieren ist. Diese Koordination verschiedener, in ihrem jeweiligen Betrieb aufeinander abzustimmender angetriebener Achsen übernimmt vorzugsweise eine als Bewegungssteuerung bezeichnete Steuereinheit, wobei dezentral z. B. jeder Antriebseinheit eine derartige Steuereinheit zugeordnet sein kann oder wobei eine zentrale Steuereinheit für mehrere von ihr gesteuerte Antriebseinheiten vorgesehen ist. Die zumindest eine Antriebseinheit steuernde Steuereinheit weist z. B. einen Logikprozessor auf, welcher eine schnelle Signalverarbeitung zur Steuerung des von der Antriebseinheit oder den Antriebseinheiten ausgeführten Bewegungsablaufes ermöglicht. Die zumindest eine Antriebseinheit oder mehrere Antriebseinheiten steuernde Steuereinheit kann in einer Baueinheit mit einem Antriebsregler von einer der Antriebseinheiten zusammengefasst sein, sodass vorzugsweise der Antriebsregler den Logikprozessor aufweist. Der von der Antriebseinheit oder den Antriebseinheiten ausgeführte Bewegungsablauf ermöglicht eine Transportgeschwindigkeit des Bedruckstoffes von z. B. 16 m/s oder mehr, wenn der Bedruckstoff bahnförmig ausgebildet ist, oder von 18.000 Bogen pro Stunde oder mehr, wenn dieser bogenförmig ausgebildet ist, wobei der Bedruckstoff mit dieser jeweiligen Transportgeschwindigkeit durch die Druckmaschine bzw. Druckanlage transportiert und dabei zu einem Druckerzeugnis verarbeitet wird.

In oder an der Druckmaschine bzw. Druckanlage ist z. B. in Verbindung mit einer oder mehreren Maschineneinheiten mindestens eine Einrichtung vorgesehen, die eine im Produktionsprozess der Druckmaschine aufgetretene Störung erkennt. Eine solche betriebsbedingte Störung kann z. B. ein Riss oder ein Bruch in einer Bedruckstoffbahn während ihrer Verarbeitung im Druckprozess sein, aber auch ein Schaden an einem einen Zylinder oder eine Walze lagernden Lager und/oder ein Fehlen von Druckfarbe in einem Farbwerk und/oder ein Fehlen von Feuchtmittel in einem Feuchtwerk. Die eine betriebsbedingte Störung erkennende Einrichtung weist z. B. mindestens einen Sensor auf, der diese Störung detektiert und ein diese Störung anzeigendes Signal generiert. Ein solcher Sensor kann z. B. als eine optische Messeinrichtung oder als ein Temperaturfühler ausgebildet sein. Die optische Messeinrichtung ist z. B. als eine Fotozelle oder als eine Lichtschranke oder als ein Reflextaster ausgebildet, wobei die optische Messeinrichtung z. B. dem Infrarotbereich zugeordnetes Licht verwendet und/oder auswertet. Eine einen Bahnbruch erkennende Einrichtung kann auch z. B. mindestens einen Ultraschallsensor oder einen anderen einen Abstand oder einen Durchgang erfassenden Sensor verwenden.

In bisher gebräuchlichen Druckanlagen leitet die eine betriebsbedingte Störung erkennende Einrichtung das eine Störung im Druckprozess anzeigende Signal an eine in oder an einer der Maschineneinheiten vorgesehene Ablaufsteuerung, wobei diese Ablaufsteuerung z. B. als eine speicherprogrammierbare Steuerung (SPS) mit vorzugsweise mehreren Signaleingängen und Signalausgängen ausgebildet ist. Nachdem die Ablaufsteuerung das die Störung anzeigende Signal ausgewertet hat, betätigt die Ablaufsteuerung aufgrund ihrer Programmierung durch ein von ihr abgesetztes Ausgangssignal z. B. einen zu einer sicherheitsrelevanten Einrichtung der Druckmaschine gehörenden Aktor, um auf die erkannte Störung zu reagieren und/oder um eine Maßnahme zur Abhilfe und/oder zur Eindämmung einer Wirkung der Störung einzuleiten, wobei die sicherheitsrelevante Einrichtung z. B. ein Abschlagmesser oder eine Aufwickelvorrichtung oder eine Transportweiche jeweils zur Einwirkung auf den durch die Druckmaschine bzw. Druckanlage transportierten Bedruckstoff aufweist. Die von der Ablaufsteuerung und/oder der sicherheitsrelevanten Einrichtung ausgelöste Maßnahme schließt i. d. R. aber auch ein, auf eine oder mehrere Antriebseinheiten der Druckanlage einzuwirken, um diese z. B. kontrolliert zum Stillstand zu bringen, zumindest aber zu verlangsamen. Es hat sich gezeigt, dass in der Praxis die Reaktionszeit vom sensorischen Erkennen einer Störung im Produktionsprozess bis zum Einleiten einer Schaden minimierenden oder abwendenden Maßnahme verbesserungsbedürftig ist. Als ursächlich für eine zu lange Reaktionszeit werden insbesondere eine zu geringe Datenverarbeitungsgeschwindigkeit in der Ablaufsteuerung und/oder zu komplexe, über mehrere Schnittstellen führende Signalwege angesehen.

Es wird nun vorgeschlagen, mindestens eine mindestens eine Antriebseinheit steuernde Steuereinheit mit mindestens einen Signaleingang zum Anschluss eines Sensors zur Erkennung einer betriebsbedingten Störung auszustatten, sodass zumindest diese eine Antriebseinheit auf die erkannte betriebsbedingte Störung unmittelbar und direkt reagieren kann. Dadurch wird die Signallaufzeit für ein eine Störung anzeigendes Signal und/oder die Verarbeitungszeit dieses Signals verkürzt, da eine direkte und unmittelbare Reaktion der Antriebseinheit möglich ist. Dadurch kann die Antriebseinheit bei einer detektierten betriebsbedingten Störung insbesondere schneller zum Stillstand gebracht werden. Der erzielbare Zeitgewinn in der Reaktionszeit kann z. B. im Bereich zwischen 30% und 80% liegen. Die zumindest eine der Antriebseinheiten steuernde Steuereinheit, die das eine Störung anzeigende Signal empfängt, kann z. B. auch mindestens einen Signalausgang aufweisen, an dem z. B. eine sicherheitsrelevante Einrichtung, z. B. ein Abschlagmesser oder eine Aufwickelvorrichtung oder eine Transportweiche für den Bedruckstoff, zu deren jeweiliger Ansteuerung anschließbar ist.

Anhand der einzigen Figur wird die gefundene Lösung nun noch näher erläutert. Mehrere in der Druckanlage angeordnete Antriebseinheiten 01; 02, z. B. in einem Druckwerk jeweils mindestens einen Zylinder und/oder mindestens eine Walze antreibende Antriebseinheiten 01; 02, sind an ein Kommunikationsnetzwerk der Druckanlage angeschlossen, wobei der die Antriebseinheiten 01; 02 verbindende Teil des Kommunikationsnetzwerkes z. B. als ein lokaler Antriebsbus 03 ausgebildet ist. Der z. B. dem Standard Sercos III oder Profinet entsprechende lokale Antriebsbus 03 steht mit einer Bewegungssteuerung 04 in datentechnischer Verbindung, wobei die Bewegungssteuerung 04 die durch die an den lokalen Antriebsbus 03 angeschlossenen Antriebseinheiten 01; 02 angetriebenen Achsen z. B. in ihrer relativen Winkellage zueinander koordiniert. Die Aufgabe der Bewegungssteuerung 04 besteht demnach vorrangig darin, den Bewegungsablauf verschiedener Achsen zeitlich miteinander zu synchronisieren, wobei diese Aufgabe aufgrund der hohen Geschwindigkeit, mit der die einzelnen Bewegungsabläufe ausgeführt werden, nur durch einen oder mehrere Logikprozessoren mit einer jeweils sehr schnellen Datenverarbeitung lösbar ist.

Die Bewegungssteuerung 04 steht ihrerseits mit einem gleichfalls z. B. dem Standard Sercos III oder Profinet entsprechenden, übergeordneten Antriebsbus 06 in datentechnischer Verbindung, wobei auch der übergeordnete Antriebsbus 06 ein Teil des in der Druckanlage angeordneten Kommunikationsnetzwerkes ist, wobei der übergeordnete Antriebsbus 06 seinerseits an einen den Produktionsprozess in einer Sektion koordinierenden Sektionsrechner (nicht dargestellt) und dieser wiederum über einen weiteren Teil des Kommunikationsnetzwerkes z. B. an einen Leitstand der Druckanlage angeschlossen sein kann. Das in der Druckanlage angeordnete Kommunikationsnetzwerk kann demnach als ein kaskadiertes Kommunikationssystem mit mehreren hierarchisch gegliederten Steuerungsebenen ausgebildet sein. Als Alternative kann in der Druckmaschine bzw. Druckanlage ein hinsichtlich aller ihrer Steuerungsebenen durchgängiges, einheitliches und damit nicht in Teilbereiche unterteiltes Kommunikationsnetzwerk vorgesehen sein.

Die an den lokalen Antriebsbus 03 angeschlossenen Antriebseinheiten 01; 02 weisen jeweils einen jeweils mindestens einen Motor 07; 08 regelnden Antriebsregler 09; 11 auf. Zur Detektion einer im Produktionsprozess der Druckmaschine aufgetretenen Störung, z. B. eines Risses in der Bedruckstoffbahn während ihrer Verarbeitung im Druckwerk, ist eine diese betriebsbedingte Störung erkennende Einrichtung vorgesehen, wobei diese die betriebsbedingte Störung erkennende Einrichtung z. B. mindestens einen Sensor 12 aufweist, der diese Störung detektiert und ein diese Störung anzeigendes Signal generiert. Dieser Sensor 12 ist z. B. als eine Lichtschranke oder als ein Reflextaster ausgebildet und in seiner Wirkrichtung auf den Bedruckstoff 17 gerichtet. Das vom Sensor 12 bei der Detektion einer im Produktionsprozess der Druckmaschine aufgetretenen Störung generierte Signal wird einem der Antriebsregler 09 zugeleitet, der dieses eine Störung anzeigende Signal an einem Signaleingang 13 aufnimmt.

Aufgrund des vom Sensor 12 zugeleiteten, eine Störung anzeigenden Signals kann die Antriebseinheit 01 unmittelbar und direkt auf die erkannte Störung reagieren. Diese Reaktion kann einschließen, dass der Antriebsregler 09 dieser Antriebseinheit 01 den Bewegungsablauf des Motors 07 dieser Antriebseinheit 01 verlangsamt und/oder kontrolliert zum Stillstand bringt. Darüber hinaus kann die Reaktion des Antriebsreglers 09 vorsehen, dass der Antriebsregler 09 über einen Signalausgang 14 eine sicherheitsrelevante Einrichtung der Druckmaschine ansteuert, wobei die sicherheitsrelevante Einrichtung z. B. einen Aktor 16 aufweist, wobei der Aktor 16 als ein steuerbares, vorzugsweise elektrisch steuerbares Stellglied 16 ausgebildet ist, welches ein Signal des Antriebsreglers 09 in mechanische Arbeit umsetzt, d. h. vorzugsweise in eine Bewegung. Der Aktor 16 betätigt z. B. ein auf den Bedruckstoff 17 einwirkendes Abschlagmesser oder eine den Bedruckstoff 17 aufwickelnde Aufwickelvorrichtung oder eine den Bedruckstoff 17 aus seinem Transportweg durch die Druckmaschine bzw.

Druckanlage ausschleusende Transportweiche. Auch die weiteren in der Druckmaschine bzw. Druckanlage vorgesehenen Antriebseinheiten 01; 02 können jeweils einen Antriebsregler 09; 11 mit mindestens einem Signaleingang 13 zur Aufnahme eines von einem Sensor 12 generierten Signals sowie gegebenenfalls einen Signalausgang 14 zur Ansteuerung eines Aktors 16 einer sicherheitsrelevanten Einrichtung aufweisen. Der Signaleingang 13 und/oder der Signalausgang 14 des Antriebsreglers 09; 11 sind jeweils insbesondere parametrierbar und damit an unterschiedliche Sensoren 12 und/oder Aktoren 16 anpassbar ausgebildet, wodurch der jeweilige Antriebsregler 09; 11 auf einfache Weise an sein jeweiliges Betriebsumfeld und/oder seine jeweiligen Betriebsbedingungen adaptierbar ist.

Vorteilhafterweise ist vorgesehen, dass ein an einem Antriebsregler 09 eingegangenes Signal eines Sensors 12 von diesem Antriebsregler 09 auch an andere an dem lokalen Antriebsbus 03 angeschlossene Antriebsregler 11 weitergeleitet wird, damit auch die Motore der anderen zugehörigen Antriebseinheiten 01; 02 auf das eine betriebsbedingte Störung anzeigende Signal des Sensors 12 reagieren können. Gleichfalls kann das eine betriebsbedingte Störung anzeigende Signal des Sensors 12, das von einem der Antriebsregler 09 aufgenommen worden ist, z. B. über die Bewegungssteuerung 04 und den übergeordneten Antriebsbus 06 an weitere Antriebseinheiten 01; 02 geleitet werden, um dort deren Motore in Abhängigkeit von der detektierten Störung zu regeln und/oder um zumindest einen an den jeweiligen Antriebsregler 09; 11 der anderen Antriebseinheiten 01; 02 angeschlossenen Aktor 16 anzusteuern. Eine von einem Sensor 12 detektierte betriebsbedingte Störung kann bei in einem Verbund angeordneten Antriebseinheiten 01; 02 unterschiedliche, übergreifende Reaktionen auslösen.

In einer vorteilhaften Ausführung ist die Bewegungssteuerung 04 in einem der Antriebsregler 09; 11 der Antriebseinheiten 01; 02 integriert ausgebildet. Es kann vorgesehen sein, dass eine mehrere Antriebseinheiten 01; 02 koordinierende Bewegungssteuerung 04 die von ihr koordinierten Antriebseinheiten 01; 02 auf eine von einem Sensor 12 detektierte betriebsbedingte Störung unterschiedlich reagieren lässt, indem sie diese Antriebseinheiten 01; 02 unterschiedlich verlangsamt und/oder mit unterschiedlichen Reaktionszeiten zum Stillstand bringt. Je nach der Aufgabe der jeweiligen Antriebseinheiten 01; 02 kann deren jeweilige Reaktion auf die von einem in dem jeweiligen Verbund angeordneten Sensor 12 detektierte betriebsbedingte Störung gleichförmig oder ungleichförmig sein.

In jedem Fall ist vorgesehen, sich die insbesondere jeweils von mindestens einem Logikprozessor ausgeführte schnelle Signalverarbeitung in den Antriebsreglern 09; 11 und/oder der Bewegungssteuerung 04 zunutze zu machen, um die Reaktionszeit auf eine betriebsbedingte Störung zu verkürzen und unmittelbar und direkt mit mindestens einer der Antriebseinheiten 01; 02 auf die erkannte betriebsbedingte Störung zu reagieren.

### Bezugszeichenliste

- 01: Antriebseinheit
- 02: Antriebseinheit
- 03: lokaler Antriebsbus
- 04: Bewegungssteuerung
- 05: -
- 06: übergeordneter Antriebsbus
- 07: Motor
- 08: Motor
- 09: Antriebsregler
- 10: -
- 11: Antriebsregler
- 12: Sensor
- 13: Signaleingang
- 14: Signalausgang
- 15: -
- 16: Aktor, Stellglied
- 17: Bedruckstoff

## Patentansprüche

1. Bearbeitungsmaschine mit mindestens einer Antriebseinheit (01; 02) mit einem zumindest einen Motor (07; 08) regelnden Antriebsregler (09; 11) mit zumindest einem Signaleingang (13) mit mindestens einem daran angeschlossenen Sensor (12), wobei der Signaleingang (13) für unterschiedliche Sensoren (12) parametrierbar ist, wobei mehrere Antriebseinheiten (01; 02) vorgesehen sind, wobei mehrere Antriebsregler (09; 11) verschiedener Antriebseinheiten (01; 02) an ein selbes Kommunikationsnetzwerk angeschlossen sind, **dadurch gekennzeichnet, dass** einer der an das Kommunikationsnetzwerk angeschlossenen Antriebsregler (09; 11) den von ihm geregelten Motor (07; 08) in Abhängigkeit von einer Störung regelt, die ein an einen der anderen Antriebsregler (09; 11) angeschlossener Sensor (12) detektiert.

2. Bearbeitungsmaschine nach Anspruch 1, **dadurch gekennzeichnet, dass** der Antriebsregler (09; 11) mindestens einen Signalausgang (14) aufweist, wobei an dem Signalausgang (14) ein Aktor (16) angeschlossen ist.

3. Bearbeitungsmaschine nach Anspruch 2, **dadurch gekennzeichnet, dass** der Signalausgang (14) des Antriebsreglers (09; 11) für unterschiedliche Aktoren (16) parametrierbar ist.

4. Bearbeitungsmaschine nach Anspruch 1, **dadurch gekennzeichnet, dass** jede der Antriebseinheiten (01; 02) jeweils einen zumindest einen Motor (07; 08) regelnden Antriebsregler (09; 11) aufweist.

5. Bearbeitungsmaschine nach Anspruch 1, **dadurch gekennzeichnet, dass** das Kommunikationsnetzwerk Ethernet-basiert ausgebildet ist.

6. Bearbeitungsmaschine nach Anspruch 2, **dadurch gekennzeichnet, dass** einer der an das Kommunikationsnetzwerk angeschlossenen Antriebsregler (09; 11) den an ihm angeschlossenen Aktor (16) in Abhängigkeit von einer Störung ansteuert, die ein an einen der anderen Antriebsregler (09; 11) angeschlossener Sensor (12) detektiert.

7. Bearbeitungsmaschine nach Anspruch 1, **dadurch gekennzeichnet, dass** die Antriebseinheit (01; 02) einen Logikprozessor aufweist.

8. Bearbeitungsmaschine nach Anspruch 1, **dadurch gekennzeichnet, dass** sie aus mehreren Modulen besteht, wobei die jeweiligen Module einzeln und unabhängig voneinander gefertigt sind.

9. Bearbeitungsmaschine nach Anspruch 1, **dadurch gekennzeichnet, dass** sie mehrere Sektionen aufweist, wobei in den jeweiligen Sektionen voneinander unabhängige Produktionen betreibbar sind.

10. Bearbeitungsmaschine nach Anspruch 1, **dadurch gekennzeichnet, dass** das Kommunikationsnetzwerk eine Netzwerkschnittstelle aufweist, wobei die Netzwerkschnittstelle eine Kommunikation der Module mit einem außerhalb und getrennt von der Bearbeitungsmaschine angeordneten Rechner über ein lokales Netzwerk (LAN) und/oder über ein weltweit operierendes Netzwerk (Internet) ermöglicht und/oder koordiniert.

11. Bearbeitungsmaschine nach Anspruch 1, **dadurch gekennzeichnet, dass** sie als eine Druckmaschine ausgebildet ist.

12. Bearbeitungsmaschine nach Anspruch 1, **dadurch gekennzeichnet, dass** sie als eine Rollendruckmaschine oder als eine Bogendruckmaschine oder als eine Tiefdruckmaschine ausgebildet ist.

13. Bearbeitungsmaschine nach Anspruch 1, **dadurch gekennzeichnet, dass** sie als eine in einem Flachdruckverfahren druckende Druckmaschine ausgebildet ist.

14. Bearbeitungsmaschine nach Anspruch 1, **dadurch gekennzeichnet, dass** der Motor (07; 08) der Antriebseinheit (01; 02) eine Rollenaufnahme eines Rollenwechslers antreibt.

15. Bearbeitungsmaschine nach Anspruch 1, **dadurch gekennzeichnet, dass** der Motor (07; 08) der Antriebseinheit (01; 02) einen oder mehrere Zylinder eines Druckwerks antreibt.

16. Bearbeitungsmaschine nach Anspruch 1, **dadurch gekennzeichnet, dass** der Motor (07; 08) der Antriebseinheit (01; 02) einen oder mehrere Zylinder eines Falzapparates antreibt.

17. Bearbeitungsmaschine nach Anspruch 1, **dadurch gekennzeichnet, dass** der Motor (07; 08) der Antriebseinheit (01; 02) eine oder mehrere Walzen eines Farbwerks und/oder eines Feuchtwerks antreibt.

18. Bearbeitungsmaschine nach Anspruch 1, **dadurch gekennzeichnet, dass** der Motor (07; 08) der Antriebseinheit (01; 02) eine oder mehrere Zugwalzen in einem Bahnführungssystem antreibt.

19. Bearbeitungsmaschine nach Anspruch 1, **dadurch gekennzeichnet, dass** die betriebsbedingte Störung ein Bahnriss und/oder ein Bahnbruch und/oder ein Lagerschaden und/oder ein Fehlen von Druckfarbe und/oder ein Fehlen von Feuchtmittel ist.

20. Bearbeitungsmaschine nach Anspruch 1, **dadurch gekennzeichnet, dass** eine sicherheitsrelevante Einrichtung vorgesehen ist, wobei die sicherheitsrelevante Einrichtung als ein auf einen Bedruckstoff (17) einwirkendes Abschlagmesser oder als eine den Bedruckstoff (17) aufwickelnde Aufwickelvorrichtung oder als eine den Bedruckstoff (17) aus seinem Transportweg durch die Druckmaschine ausschleusende Transportweiche ausgebildet ist.

## Claims

1. Processing machine having at least one drive unit (01; 02) with a drive controller (09; 11) having at least one signal input (13) having at least one sensor (12) attached thereto controlling at least one motor (07; 08), the signal input (13) being parameterable for different sensors (12), a number of drive units (01; 02) being provided, a number of drive controllers (09; 11) of different drive units (01; 02) being attached to a same communication network, **characterized in that** a drive regulator (09; 11) attached to the communication network controls the motor (07; 08) controlled by it depending on a fault that a sensor (12) attached to one of the other drive controllers (09; 11) detects.

2. Processing machine according to Claim 1, **characterized in that** the drive controller (09; 11) has at least one signal output (14), an actuator (16) being attached to the signal output (14).

3. Processing machine according to Claim 2, **characterized in that** the signal output (14) of the drive controller (09; 11) is parameterable for different actuators (16).

4. Processing machine according to Claim 1, **characterized in that** each of the drive units (01; 02) in each case has a drive controller (09; 11) controlling at least one motor (07; 08).

5. Processing machine according to Claim 1, **characterized in that** the communication network is of ethernet-based design.

6. Processing machine according to Claim 2, **characterized in that** one of the drive controllers (09; 11) attached to the communication network controls the actuator (16) attached to it as a function of a fault that a sensor (12) attached to one of the other drive controllers (09; 11) detects.

7. Processing machine according to Claim 1, **characterized in that** the drive unit (01; 02) has a logic processor.

8. Processing machine according to Claim 1, **characterized in that** it consists of a number of modules, the respective modules being manufactured individually and independently of one another.

9. Processing machine according to Claim 1, **characterized in that** it has a number of sections, productions independent of one another being operable in the respective sections.

10. Processing machine according to Claim 1, **characterized in that** the communication network has a network interface, the network interface making possible and/or coordinating communication of the modules with a computer arranged outside of and separately from the processing machine by means of a local network (LAN) and/or by means of a worldwide operating network (Internet).

11. Processing machine according to Claim 1, **characterized in that** it is designed as a printing press.

12. Processing machine according to Claim 1, **characterized in that** it is designed as a web-fed printing press or as a sheet-fed printing press or as a gravure printing press.

13. Processing machine according to Claim 1, **characterized in that** it is designed as a printing press printing in a planographic printing process.

14. Processing machine according to Claim 1, **characterized in that** the motor (07; 08) of the drive unit (01; 02) drives a roll support of a roll changer.

15. Processing machine according to Claim 1, **characterized in that** the motor (07; 08) of the drive unit (01; 02) drives one or more cylinders of a printing press.

16. Processing machine according to Claim 1, **characterized in that** the motor (07; 08) of the drive unit (01; 02) drives one or more cylinders of a folding apparatus.

17. Processing machine according to Claim 1, **characterized in that** the motor (07; 08) of the drive unit (01; 02) drives one or more cylinders of a dampening unit.

18. Processing machine according to Claim 1, **characterized in that** the motor (07; 08) of the drive unit (01; 02) drives one or more draw rollers in a web guidance system.

19. Processing machine according to Claim 1, **characterized in that** the operational disorder is a web tear and/or a web break and/or bearing damage and/or a lack of printing ink and/or a lack of moistening agent.

20. Processing machine according to Claim 1, **characterized in that** a device relevant to safety is provided, the device relevant to safety being designed as a knife acting on a print substrate (17) or as a winding apparatus winding up the print substrate (17) or as transportation points removing the print substrate (17) from its transport path through the printing press.

## Revendications

1. Machine de traitement comportant au moins une unité d'entraînement (01 ; 02) avec un régulateur d'entraînement (09 ; 11) régulant au moins un moteur (07 ; 08), comportant au moins une entrée de signal (13) avec au moins un capteur (12) qui lui est raccordé, l'entrée de signal (13) étant paramétrable pour différents capteurs (12), plusieurs unités d'entraînement (01 ; 02) étant prévues, plusieurs régulateurs d'entraînement (09 ; 11) de différentes unités d'entraînement (01 ; 02) étant reliés au même réseau de communication, **caractérisée en ce qu'**un des régulateurs d'entraînement (09 ; 11) reliés au réseau de communication commande le moteur (07 ; 08) qu'il régule en fonction d'une défaillance détectée par un capteur (12) raccordé à un des autres régulateurs d'entraînement (09 ; 11).

2. Machine de traitement selon la revendication 1, **caractérisée en ce que** le régulateur d'entraînement (09 ; 11) compote au moins une sortie de signal (14), un actionneur (16) étant raccordé à la sortie de signal (14).

3. Machine de traitement selon la revendication 2, **caractérisée en ce que** la sortie de signal (14) du régulateur d'entraînement (09 ; 11) est paramétrable pour différents actionneurs (16).

4. Machine de traitement selon la revendication 1, **caractérisée en ce que** chacune des unités d'entraînement (01 ; 02) comporte un régulateur d'entraînement (09 ; **11)** régulant au moins un moteur (07 ; 08).

5. Machine de traitement selon la revendication 1, **caractérisée en ce que** le réseau de communication est réalisé sur une base Ethernet.

6. Machine de traitement selon la revendication 2, **caractérisée en ce qu'**un des régulateurs d'entraînement (09 ; 11) reliés au réseau de communication commande l'actionneur (16) qui lui est raccordé en fonction d'une défaillance détectée par un capteur (12) raccordé à un des autres régulateurs d'entraînement (09 ; 11).

7. Machine de traitement selon la revendication 1, **caractérisée en ce que** l'unité d'entraînement (01 ; 02) comporte un processeur logique.

8. Machine de traitement selon la revendication 1, **caractérisée en ce qu'**elle est constituée de plusieurs modules, les différents modules étant fabriqués individuellement et indépendamment les uns des autres.

9. Machine de traitement selon la revendication 1, **caractérisée en ce qu'**elle comporte plusieurs sections, des productions indépendantes les unes des autres pouvant être lancées dans les différentes sections.

10. Machine de traitement selon la revendication 1, **caractérisée en ce que** le réseau de communication présente une interface réseau, ladite interface réseau permettant et/ou coordonnant une communication des modules avec un ordinateur disposé extérieurement à la machine de traitement et séparément de celle-ci via un réseau local (LAN) et/ou via un réseau opérant mondialement (Internet).

11. Machine de traitement selon la revendication 1, **caractérisée en ce qu'**elle est réalisée comme machine à imprimer.

12. Machine de traitement selon la revendication 1, **caractérisée en ce qu'**elle est réalisée comme machine à imprimer rotative ou comme machine à imprimer feuille à feuille ou comme machine à imprimer au rouleau à gravure en creux.

13. Machine de traitement selon la revendication 1, **caractérisée en ce qu'**elle est réalisée comme machine à imprimer par procédé d'impression à plat.

14. Machine de traitement selon la revendication 1, **caractérisée en ce que** le moteur (07 ; 08) de l'unité d'entraînement (01 ; 02) entraîne un support de bobine d'un changeur de bobine.

15. Machine de traitement selon la revendication 1, **caractérisée en ce que** le moteur (07 ; 08) de l'unité d'entraînement (01 ; 02) entraîne un ou plusieurs cylindres d'un groupe d'impression.

16. Machine de traitement selon la revendication 1, **caractérisée en ce que** le moteur (07 ; 08) de l'unité d'entraînement (01 ; 02) entraîne un ou plusieurs cylindres d'une plieuse.

17. Machine de traitement selon la revendication 1, **caractérisée en ce que** le moteur (07 ; 08) de l'unité d'entraînement (01 ; 02) entraîne un ou plusieurs rouleaux d'un groupe d'encrage et/ou d'un groupe de mouillage.

18. Machine de traitement selon la revendication 1, **caractérisée en ce que** le moteur (07 ; 08) de l'unité d'entraînement (01 ; 02) entraîne un ou plusieurs rouleaux tendeurs d'un système de guidage de bande.

19. Machine de traitement selon la revendication 1, **caractérisée en ce que** la défaillance de fonctionnement est une déchirure de bande et/ou une rupture de bande et/ou un dommage de palier et/ou un manque d'encre d'impression et/ou un manque de solution de mouillage.

20. Machine de traitement selon la revendication 1, **caractérisée en ce qu'**un dispositif de sécurité est prévu, ledit dispositif de sécurité étant réalisé comme une lame de coupe agissant sur un support d'impression (17), ou comme mécanisme d'enroulement enroulant le support d'impression (17), ou comme aiguillage de transport détournant le support d'impression (17) de sa course de transport au travers de la machine à imprimer.
